# EUROPEAN PATENT APPLICATION

(11) **EP 1 428 803 A1**
(43) Date of publication of application: **16.06.2004**
(21) Application number: 02380220.0
(22) Date of filing: 28.10.2002
(51) Int. Cl.: C03C 17/04, C03C 17/00

(54) **Procedure For Production Of Laminated And Layered Glass And Glass So Obtained.**

(71) Applicant: Esteban Hernadez, Antonio, Villena 03400 (Alicante) (ES); Hernadez Osa, Santiago, 03400 Villlena (Alicante) (ES)
(72) Inventor: Esteban Hernadez, Antonio, Villena 03400 (Alicante) (ES); Hernadez Osa, Santiago, 03400 Villlena (Alicante) (ES)
(74) Representative: Esteban Perez-Serrano, Maria Isabel

(57) **Abstract**

Laminated or layered glass which has a base glass on which is mounted a layer of coloured glass with a certain grain, wherein the particularity exists that the two pieces of glass are obtained in an independent way one from the other, to later and after the grinding or mortaring of the layered glass, proceed to the placement on the base glass either by means of serigraphy techniques by roller or framed screen or with covering metallic roller, or dry printing techniques such as transfers on glass, finally the assembly obtained is introduced into a furnace where it is baked, and subsequently the assembly is subjected to annealing with the object of relieving strain from the baking, the laminated glass obtained being ready for manufacture.

## Description

### OBJECT OF THE INVENTION

The objective of the present invention is both the procedure for production of the laminated or layered glass and the glass obtained by means of said procedure.

The laminated glass, in folded or sheet form, consists of two lights, one the base glass and the other the layered glass.

It is an objective of the present invention to develop a manufacturing procedure for laminated glass, folded or layered, by means of an industrial procedure which allows higher production, larger sizes and the possibility of working with different thicknesses to be obtained.

It is also an objective of the invention to develop a manufacturing procedure wherein the base glass is obtained independently of the layered glass which is then later applied by grinding or mortaring to the base glass.

Therefore the present invention is bound within the ambit of the production of laminated glass, folded or layered, that is to say of glass pieces which comprise two layers.

### BACKGROUND OF THE INVENTION

Until the present time in the procedure for obtaining laminated glass, folded or layered, one obtains at the same time both the base glass and the layered glass, being joined in the process before manufacturing the sheet.

In said procedure both bath furnaces and crucible furnaces are used. In the case of crucible furnaces, they have two lines of 4 to 8 crucibles accessible from opposing sides, wherein each crucible contains a different colour of glass. The front parts of the furnace are provided with platforms on which the work is carried out, whereon some partitions which correspond to each crucible divide each platform into several compartments.

There are two drum arches mounted at the ends of the furnace, with the objective of allowing reheating of the cylinders. These arches have two large, easily accessible mouths of 70 to 90 cm in diameter, and covered with the object of protecting the operatives from irradiation. They likewise have a hook on which the shaping iron can rest.

The procedure for obtaining laminated glass, folded or layered is carried out by means of the process of gathering and shaping and follows the steps below.

- Immerse the iron in the molten glass mass which will be the base of the laminated glass, folded or layered, attaching a small quantity of glass to the tip of the iron.

- Rotate and compress the glass on the marble, blowing lightly, obtaining a small ball.

- Submerge the iron for a second time in the glass once the first ball has cooled a little.

- Forming the ball enlarging it by means of blowing into the mouthpiece.

- Gather glass in another crucible of another different colour creating an external layer of different colour.

- Turn the iron horizontally in the fork of the vat to obtain a well-gripped pear. The quasi-solid upper part will determine the diameter of the cylinder, while the lower part will be extended lengthwise.

- Making the cylinder, introducing the pear in the arch of the wooden drum, the thick part being warmed.

- Withdrawal of the iron and disposition thereof in a straight manner over a hole or pit prepared in the floor.

- Blowing with force whereby the glass lengthens under its own weight being swollen by the operative's own weight.

- Repetition of the operation of insertion in the arch of wooden drum, horizontal rotation, positioning over the hole and balancing by blowing until reaching the desired distribution and length.

- Stick a small quantity of glass to the bottom half sphere of the cylinder.

- Positioning of the cylinder in the mouth of the furnace closing the mouthpiece of the iron with a finger.

- Rotation of the iron until the internal air expands and the glass is perforated at the point of least resistance, that on which the hot glass has been applied.

- Withdrawal of the cylinder from the furnace.

- Placement of the iron on the fork.

- Cut the cylinder uniformly through the perforated place.

- Heating in the furnace to dark red heat, withdrawal and balancing inside the hole.

- Separation of the cylinder from the mouth of the iron.

- Separation of the glass cap remaining by means of a thread of very hot glass.

Thus we observe that the procedure for obtaining laminated glass, folded or layered is slow, expensive, manual and not very automated, for which the objective of the present invention is to develop a procedure which allows a larger production, permits larger sizes to be obtained and also the possibility of working with different thickness.

### DESCRIPTION OF THE INVENTION

The procedure of the present invention allows laminated glass, folded or layered to be obtained in an industrial manner, wherein instead of manufacturing at the same time both the base glass and the layered glass, said glass pieces are obtained independently.

The glass which serves as base is manufactured in sheets by means of techniques of drawing, pressing or floating. The layered glass is obtained independently, being manufactured in different colours. This glass does not take specific forms but rather it is manufactured in irregular pieces. Subsequently grinding and mortaring thereof take place with a degree of crushing which will depend on the desired grain.

An important aspect is that both glass pieces be manufactured with the same coefficient of expansion or dilation.

To proceed to the depositing of the layered glass on the base glass, different techniques can be used
a) Serigraphy techniques, be this by roller or framed screen or with covering metallic roller, in which case the layered glass is ground until converted into powder in order to be able to suspend it in an oleaginous vehicle which allows a layer to be printed on the base glass.
b) Techniques of dry printing, transfers on glass, etc., in which case the grain of the layered glass will be larger.

It is possible to use both techniques on the same glass piece, good results being obtained in any of the cases, that is to say, either using the previous techniques in an independent fashion or using both on the same glass piece.

The thickness of the deposited layer will determine the intensity of the colour. When the layer has been deposited, the assembly is inserted into an annealing furnace where it is baked at a temperature between 600° C and 850° C. Subsequently it undergoes an annealing process to relieve the strain built up during the baking, allowing its later manipulation, cutting, edging, sand or acid etching, employed for fusing.

### DESCRIPTION OF THE DRAWINGS

To complete the description that will be given below and with the object of assisting in a better understanding of the characteristics thereof, the present descriptive specification is accompanied with a set of drawings in the figures of which, by way of illustration and not restrictively, the most significant details in the invention are represented.

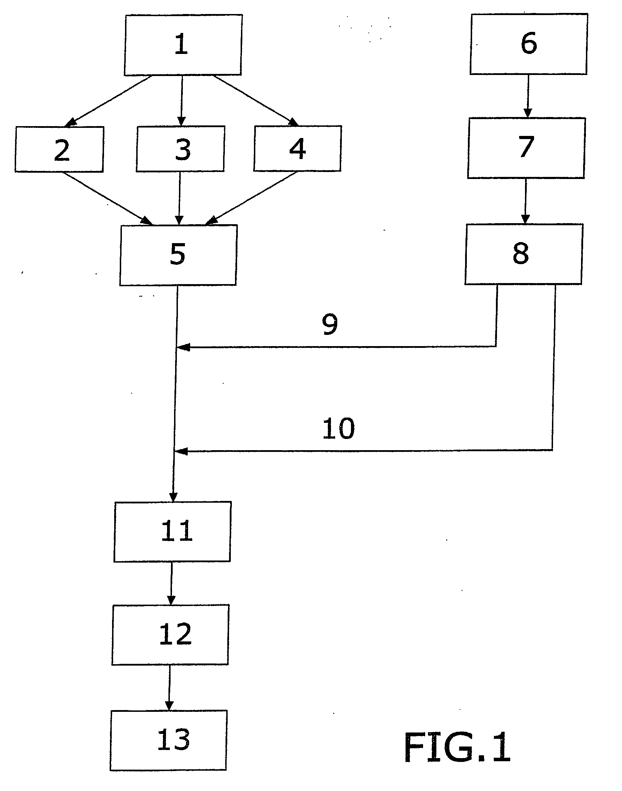

Figure 1 shows a diagram of the stages of the process by means of which the folded or layered laminated glass is obtained.

### PREFERRED EMBODIMENT OF THE INVENTION

In the light of the aforementioned figures a preferred method of embodiment is described and an explanation of the drawings is given.

In figure 1, the manufacturing stages of the laminated or layered glass is shown, where, first of all, starting with glass (1) which will serve as base and by means of any one of the techniques of drawing (2), pressing (3) or floating (4), some sheets (5) are obtained which will be used as base.

Furthermore and independently and in a melting furnace glasses of different colours are obtained. Starting with one glass (6), glasses (7) of different colours are obtained, without a specific form or with an irregular shape. Subsequently this glass (7) is ground or mortared (8) with a grain which will depend on the procedure used in the application of this layered glass to the base glass.

In the case of using serigraphy techniques (9) in the application of the ground layered glass (8) to base glass (5), glass (8) has to be ground until converted into powder so that it can be suspended in an oleaginous vehicle which allows a layer to be printed on the base glass. The serigraphy techniques can be carried out with a roller or framed screen or with a covering frame roller.

In the case of using dry printing techniques (10), the grain of the glass (8) will be coarser. In any case it is also possible to combine both techniques on a same base glass. The achieved intensity of colour will depend on the thickness of the layer applied.

After having applied the glass layer to the base glass, the assembly is introduced into annealing furnace where baking (11) takes place, carrying out thereafter an annealing (12) process with the object of relieving the strain built up during baking, permitting its later manufacture (13), such as drilling, cutting, edging, sand or acid etching, employed for fusing, chamber assembly, etc.

It is not considered necessary to enlarge this description further for an expert in the matter to undcrstand the scope of the invention and the benefits that derive therefrom.

The materials, form, size and arrangement of the elements are capable of variation provided they do not alter the essential nature of the invention.

The terms in which this specification has been expressed are always to be taken in the widest sense and not restrictively.

## Claims

1. Procedure for production of laminated or layered glass of among the pieces of glass which consist of a base glass and a layered glass of different colour and with a determined grain, **characterised in that** the base glass and the layered glass are obtained independently, said procedure comprising the following stages.
- Obtaining of some sheets (5) which will serve as base glass starting from a glass (1) by means of drawing (2) or pressing (3) or by means floating (3).
- Obtaining the ground or mortared layered glass (8) starting from some glass pieces of different colours (7) and without specific form, which in turn have been obtained starting from a glass (6) in a different melting furnace.
- Application of layered glass (8) to base glass (9) by means of one or both of the following techniques:
A) by means of serigraphy techniques (9), be it by roller or framed screen or with covering metallic roller, wherein layered glass (8), ground or mortared, has been crushed until converted into powder.
B) by means of dry printing techniques (10) such as dry transfers, wherein the grain of coating glass (8) can be larger.
- Introduction of the assembly in an annealing furnace where the whole assembly (11) undergoes baking at between 600 and 850° C.
- Subsequent annealing of the assembly with the object of relieving strain built up in the baking.
- Final manufacturing (13) wherein the glass can be drilled, cut, edged, etched by sand or acid, or employed for fusing or chamber assembly, etc.

2. Procedure for production of laminated or layered glass according to claim 1, **characterised in that** in the application of the layered glass to the base glass, serigraphy techniques (9) can be used, by roller or framed screen or with covering metallic roller, as well as dry printing (10), such as transfers on glass.

3. Procedure for production of laminated or layered glass according to claim 1, **characterised in that** both base glass (5) and layered glass (8) are manufactured with the same coefficient of expansion or dilation.

4. Laminated or layered glass **characterised in that** it is obtained according to that described in the previous claims.
